# EUROPÄISCHE PATENTSCHRIFT

(11) **EP 1 416 309 B1**
(45) Veröffentlichungstag und Bekanntmachung des Hinweises auf die Patenterteilung: **29.11.2006**
(21) Anmeldenummer: 02102520.0
(22) Anmeldetag: 31.10.2002
(51) Int. Cl.: G02B 21/18, G02B 21/06

(54) **Vergleichsmakroskop mit einem Beleuchtungssystem für Objekte**
Comparison macroscope with an illumination system for objects
Macroscope comparateur avec système d'illumination pour objects

(43) Veröffentlichungstag der Anmeldung: 06.05.2004
(73) Patentinhaber: Leica Microsystems CMS GmbH, 35578 Wetzlar (DE)
(72) Erfinder: Gluch, Claudia, Dr., 07743 Jena (DE); Gaul, Norbert, 35606, Solms-Oberbiel (DE); Woditschka, Christian, 35580, Wetzlar (DE); Frimmel, Horst, 35586 Wetzlar (DE)
(74) Vertreter: Bradl, Joachim

(56) Entgegenhaltungen:
- DE-A- 10 045 245
- DE-U- 9 413 513
- US-A- 2 144 653
- US-A- 3 186 296
- US-A- 4 403 839

## Beschreibung

Die Erfindung betrifft ein Vergleichsmakroskop mit einem Beleuchtungssystem für Objekte. Im Besonderen betrifft die Erfindung ein vergleichendes optisches System mit einem Beleuchtungssystem für Objekte, wobei das vergleichende optische System mit mehreren Makroskopen versehen ist, die über eine Brücke miteinander verbunden sind, und somit mechanisch und optisch miteinander gekoppelt sind.

Die deutsche Patentschrift 30 06 379 offenbart ein Defektprüfungssystem zur vergleichenden Prüfung eines Standardobjekts und eines Prüflings. Der Prüfling und das Standardobjekt sind auf einem gemeinsamen Träger und sowohl das Standardobjekt als auch der Prüfling werden über optische Mittel abgebildet und zusammengeführt, so dass ein Vergleich möglich ist. Für die Beleuchtung der Probe ist eine Durchlichtbeleuchtung vorgesehen.

Das U.S. Patent 4,403,839 zeigt eine Vergleichende optische Einrichtung, die zur simultanen Beobachtung von zwei Objekten ausgebildet ist. Eine Brücke umfasst die optischen Mittel zum Zusammenführen der Strahlengänge, die von den Mikroskop oder dem Makroskop erzeugt werden. Das Beleuchtungslicht wird dabei mittels des Fototubus in das System eingeführt. Wie die einzelnen Objekte auf einem oder mehreren Tische angeordnet sein müssen ist in der Schrift nicht erwähnt.

Aus der DE 94 13 513 U1 ist eine an ein Stereomikroskop adaptierbare Mikroskopierleuchte bekannt. Die Mikroskopierleuchte ist mittels mehrerer Arme am Stereomikroskop angebracht, wobei die Arme jeweils relativ zueinander mittels einer Kugelgelenkverbindung nahezu beliebig ausrichtbar sind.

Diese oben beschriebenen Makroskope werden in entsprechenden Systemen zur Durchführung von forensischen Vergleichsuntersuchungen benutzt, die als Vergleichsmakroskope ausgebildet sind. In einer bekanntesten Ausführungsform werden zwei Einzelmakroskope verwendet, die durch eine Brücke miteinander verbunden sind. In der Brücke ist eine Vorrichtung zum Zusammenführen der beiden durch die Einzelmakroskope erzeugten Einzelbilder enthalten. Durch einen an der Brücke angeordneten gemeinsamen Tubus hindurch kann der Bediener des Vergleichsmakroskops die Bilder von auf zwei verschiedenen Tischen angeordneten Objekten als übereinander liegend betrachten. Durch ein jeweiliges Ausblenden von einander entsprechenden Teilbereichen der beiden Proben entsteht ein zusammengesetztes Bild, welches einen unmittelbaren Vergleich, z.B. der einen Probenhälfte mit der andern Probenhälfte, ermöglicht.

Bei forensischen Untersuchungen ist es zur Aufklärung von Verbrechen oftmals erforderlich, das Bild einer ersten Probe, mit dem Bild einer zweiten Probe zu vergleichen, um nähere Informationen über den Hergang eines Verbrechens zu erhalten.

So werden z.B. als Objekte, die durch die Schlagbolzen einer Waffe erzeugten Abdrücke an Patronenhülsen miteinander verglichen, um festzustellen, ob bei einem oder mehreren Verbrechen dieselbe Tatwaffe eingesetzt wurde.

Eine weitere bekannte Anwendung von optischen Vergleichsuntersuchungen besteht darin, die Echtheit von Dokumenten, insbesondere von Banknoten, zu kontrollieren, um herauszufinden, ob es sich um Fälschungen handelt.

Schließlich ist es zur Aufklärung von Verbrechen oftmals erforderlich, z.B. am Tatort aufgefundene Fasern von Kleidungsstücken mit den Fasern bekannter Kleidungsstücke zu vergleichen, um Rückschlüsse darüber zu erhalten, wie ein Täter bei einer Straftat bekleidet war.

Der Erfindung liegt die Aufgabe zugrunde ein vergleichendes optisches System zu schaffen, das es einem Benutzer ermöglicht reproduzierbare Bedingungen einzustellen. Im besonderen ist es Aufgabe der Erfindung reproduzierbare Beleuchtungsbedingungen für ein Objekt zu erreichen.

Die objektive Aufgabe wird durch ein vergleichendes optisches System gelöst, das die Merkmale des Patentanspruchs 1 aufweist.

Die Erfindung hat den Vorteil, dass der Benutzer des vergleichenden optischen Systems reproduzierbar Objekte untersuchen kann, die bereits vor einiger Zeit schon mal untersucht wurden. Das vergleichende optische System besteht aus mehreren Makroskopen, die über eine Brücke miteinander verbunden sind. Damit sind die Makroskope mechanisch und optisch miteinander gekoppelt. Jedes Makroskop ist mit einer Befestigungseinrichtung für ein Beleuchtungssystem verbunden, wobei die Befestigungseinrichtung aus mehreren beweglichen Armen und einer einstellbaren Halterung für eine Lichtquelle besteht. Jedes Makroskop ist mit einem drehbaren Ring versehen, an dem ein erster Arm befestigt ist. Der drehbare Ring ist mit einer Skalierung versehen und mit einer Feststellschraube arretierbar. An dem den drehbaren Ring gegenüberliegenden Ende des ersten Arms ist eine erste Klemmvorrichtung vorgesehen, in der ein zweiter Arm geführt ist, der mit einer Skalierung versehen ist. Am zweiten Arm, gegenüber der ersten Klemmvorrichtung ist eine zweite Klemmvorrichtung vorgesehen, in der der zweite Arm und ein dritter Arm senkrecht zueinander führbar sind, und dass gegenüber der zweiten Klemmvorrichtung eine Halterung angebracht für eine Beleuchtung angebracht ist. Es ist von besonderen Vorteil, wenn die Beleuchtung bzw. die Lichtquelle als Lichtleiter ausgebildet ist. Dabei ist das Lichtaustrittsende des Lichtleiters in der Halterung geklemmt und jeweils auf die zu untersuchenden Objekte gerichtet.

Weitere vorteilhafte Ausgestaltungen der Erfindung können den Unteransprüchen entnommen werden.

In der Zeichnung ist der Erfindungsgegenstand schematisch dargestellt und wird anhand der Figuren nachfolgend beschrieben. Dabei zeigen:
- Fig. 1: eine perspektivische Ansicht einer Ausführungsform eines Vergleichsmakroskops mit einer Einrichtung zum Befestigen eines Beleuchtung für eine Probe;
- Fig. 2: eine perspektivische Detailansicht der Einrichtung zum Befestigen einer Beleuchtung und der Montage der Einrichtung an dem Makroskop.
- Fig. 3: eine Detailansicht einer einstellbaren Befestigungseinrichtung mit einer Halterung für eine Lichtquelle, und
- Fig. 4: eine Detailansicht der Befestigungseinrichtung aus Fig 3 entlang der Linie A-A.

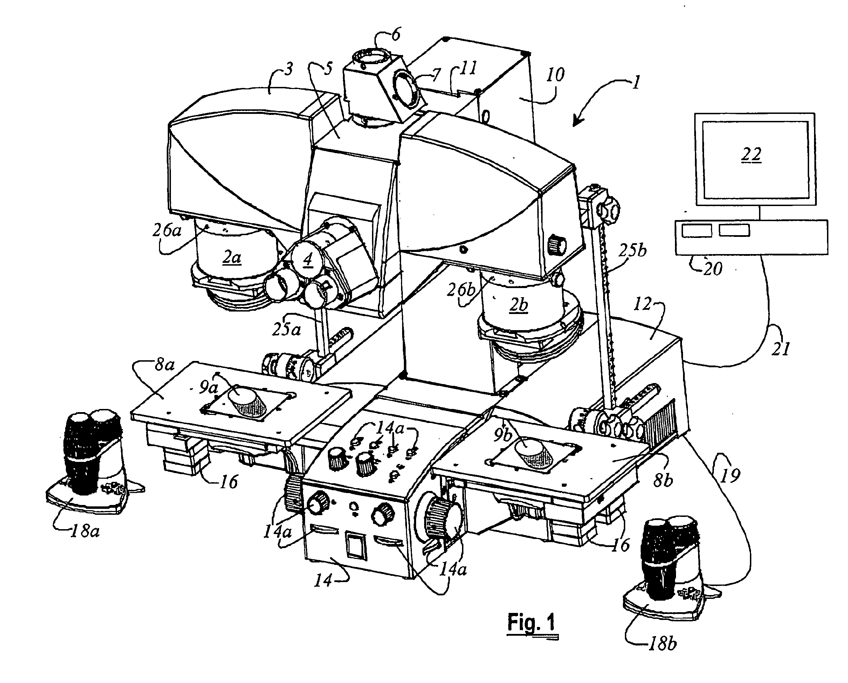

Fig. 1 zeigt ein vergleichendes optisches System 1. Das vergleichende optische System 1 besteht in dieser Ausführungsform aus einem ersten und einem zweiten Makroskop 2a und 2b, die als bildaufnehmende, optische Teilsysteme ausgestaltet sind. Mechanisch und optisch sind das erste und zweite Makroskop 2a und 2b über eine Brücke 3 miteinander verbunden. Die Brücke 3 besitzt einen Einblick 4 für einen Benutzer und einen Tubus 5 mit einem Anschluss 6 für eine Kamera (nicht dargestellt). Der Einblick 4 für den Benutzer kann schwenkbar ausgestaltet sein, um für den Benutzer eine ergonomische Arbeitsposition zu erhalten. Der Tubus 5 kann noch einen weiteren Abschluss 7 besitzen, über den z.B. eine zweite Kamera (nicht dargestellt) aufgesetzt werden kann. Dem ersten Makroskop 2a ist ein erster XYZ-Tisch 8a zugeordnet. Dem zweiten Makroskop 2b ist ein zweiter XYZ-Tisch 8b zugeordnet. Sowohl auf dem ersten als auch auf dem zweiten XYZ-Tisch 8a und 8b ist jeweils ein zu vergleichendes Objekt 9a und 9b abgelegt. In der Vergleichsmakroskopie werden als Objekte sowohl Geschosse als auch Werkzeuge begutachtet und die dadurch hinterlassenen Spuren optisch miteinander verglichen und ausgewertet. Dazu wird in den meisten Fällen das Bild in der Mitte so geteilt, dass in der linken Hälfte das Objekt 9a, das auf dem ersten XYZ-Tisch 8a positioniert ist, und in der rechten Hälfte das Objekt 9b, das auf dem zweiten XYZ-Tisch 8b positioniert ist zu sehen ist.

Die Brücke 3 zusammen mit dem ersten und dem zweiten XYZ-Tisch 8a und 8b ist an einer Säule 10 über eine Schwalbenschwanzführung 11 angebracht. Durch die Schwalbenschwanzführung 11 befestigt die Brücke 3. In Z-Richtung bzw. in der Höhe relativ zu der Oberfläche der XYZ-Tische 8a und 8b ist die Säule 10 verstellbar. Diese Bewegung der Brücke 3 ermöglicht das Grob-Einstellen der auf den beiden Tische 8a und 8b befindlichen Objekte, deren Strukturen verglichen werden sollen. Die Säule 10 selbst ist mit einem Bodenteil 12 verbunden, das wesentlich breiter ist als die Säule 10, um für das vergleichende optische System 1 eine ausreichende Standfestigkeit und Standsicherheit zu erreichen. Zwischen dem ersten als auch auf dem zweiten XYZ-Tisch 8a und 8b ist eine Steuer- und Einstellvorrichtung 14 vorgesehen, über die verschiedene Funktionen des vergleichenden optischen Systems 1 einstellbar bzw. veränderbar sind. Die Steuer- und Einstellvorrichtung 14 besitzt mehrere Betätigungselemente 14a, über die verschiedene Funktionen des vergleichenden optischen Systems 1 betätigbar sind. Es ist selbstverständlich, dass die in Fig. 1 dargestellte Steuer- und Einstellvorrichtung 14 verschieden ausgeführt sein kann.

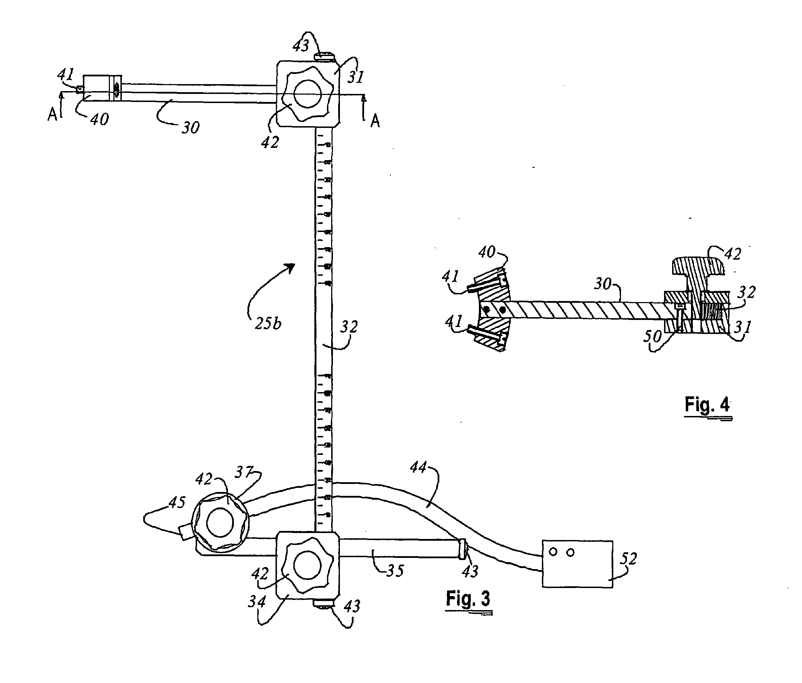

Beide XYZ-Tische 8a und 8b sind über mehrere Motoren 16 in der X-Richtung, der Y-Richtung und der Z-Richtung verstellbar. Ferner kann dem vergleichenden optischen System 1 ebenfalls eine erste und eine zweite Fernsteuereinrichtung 18a und 18b zugeordnet sein. Die erste und eine zweite Fernsteuereinrichtung 18a und 18b sind in dieser Ausführungsform jeweils über ein Kabel 19 mit dem vergleichenden optischen System 1 verbunden. Es ist selbstverständlich, dass die Verbindung beliebige technische Ausgestaltungen annehmen kann, wie z.B. Funk, Infrarot, etc. Dem vergleichenden optischen System 1 kann zusätzlich ein PC 20 zugeordnet sein, der über ein RS232-Kabel oder ein USB-Kabel 21 Steuersignale an das vergleichende optische System 1 geliefert bzw. Bilddaten oder Einstelldaten vom vergleichenden optischen System 1 erhält. Die Bilddaten werden dem Benutzer auf einem Monitor 22 dargestellt, der mit dem PC 20 verbunden ist. Ebenfalls können auf dem Monitor 22 dem Benutzer die aktuellen Einstelldaten des vergleichenden optischen Systems 1 dargestellt werden. Ferner ist jedes Makroskop 2a und 2b mit einer Befestigungseinrichtung 25a und 25b für eine Objektbeleuchtung (siehe hierzu Fig. 3) verbunden

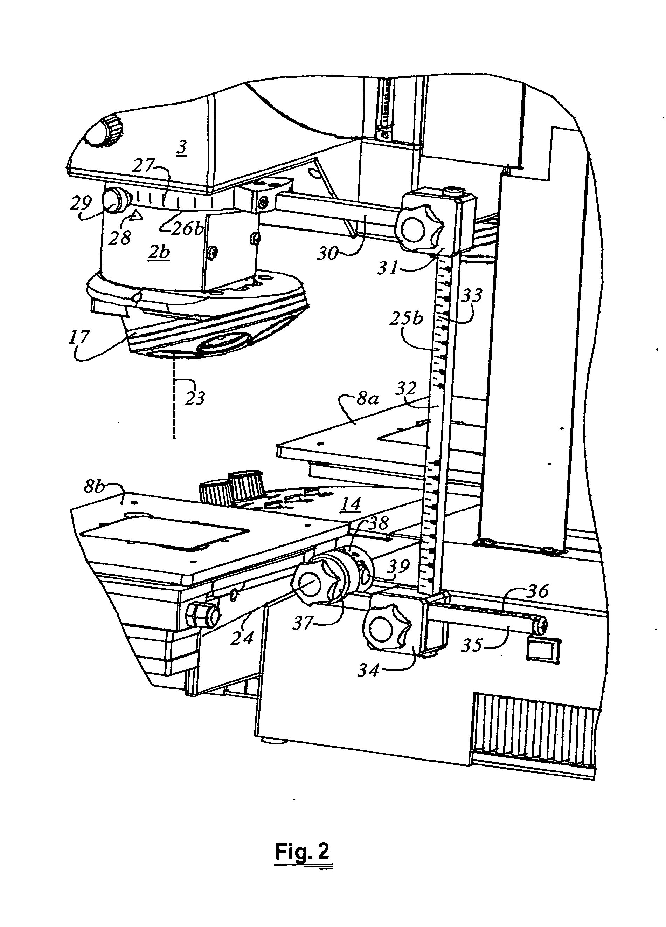

Fig. 2 zeigt eine perspektivische Detailansicht der Befestigungseinrichtung 25b, die den zweiten Makroskop 2b zugeordnet ist. Die Befestigungseinrichtung 25b dient zur Halterung einer Beleuchtung für das jeweils auf dem XYZ-Tisch 8a oder 8b befindliche Objekt 9a oder 9b. Elemente, die den Elementen aus Fig. 1 entsprechen, sind mit den gleichen Bezugszeichen bezeichnet. Die Befestigungseinrichtung 25b ist am Makroskop 2b an einem drehbaren Ring 26b befestigt, der mit einer Skalierung 27 versehen ist. Der drehbare Ring 26a oder 26b ist um eine Achse 23 drehbar. Die Befestigungseinrichtung 25b umfasst einen ersten Arm 30, der an dem drehbaren Ring 26b angeschraubt ist. Der Skalierung 27 ist eine Ablesemarkierung 28 zugeordnet, die zur Ablesung der Skalierung am drehbaren Ring 26a, 26b dient. Der drehbare Ring 26a, 26b ist mittels einer Feststellschraube 29 arretierbar. An einem dem drehbaren Ring 26a, 26b gegenüberliegenden Ende des ersten Arms 30 ist eine erste Klemmvorrichtung 31 vorgesehen, in der ein zweiter Arm 32 geführt ist, der ebenfalls mit einer Skalierung 33 versehen ist. Am zweiten Arm 32 ist gegenüber der ersten Klemmvorrichtung 31 eine zweite Klemmvorrichtung 34 vorgesehen, in der der zweite Arm 32 und ein dritter Arm 35 senkrecht zueinander führbar sind. Der dritte Arm 35 ist ebenfalls mit einer Skalierung 36 versehen. Am dritten Arm 35 ist gegenüber der zweiten Klemmvorrichtung 34 eine Halterung 37 angebracht, die am Umfang eine Skalierung 38 aufweist Die Halterung 37 ist um eine Achse 24 drehbar. Ferner besitzt die Halterung 37 eine Öffnung 39, in der die Beleuchtung für das Objekt befestigt werden kann. Am Makroskop 2b ist ferner ein Revolver 17 angebracht, mit dem verschiedene Objektive (nicht dargestellt) in den Strahlengang des Makroskops 2b gebracht werden können.

Fig. 3 zeigt eine Detailansicht der Befestigungseinrichtung 25b. Der erste Arm 30 trägt die erste Klemmvorrichtung 31 und gegenüber der ersten Klemmvorrichtung 31 ist am ersten Arm 30 eine Backe 40 mit dem ersten Arm 30 verbunden. Mit der Backe 40 kann der erste Arm 30 am drehbaren Ring 26b des zweiten Makroskops 2b befestigt werden. Selbstverständlich ist am ersten Makroskop 2a eine Befestigungseinrichtung 25a an dem drehbaren Ring 26a befestigt. Die Befestigung der Backe 40 am drehbaren Ring 26b erfolgt über mindestens eine Schraube 41. Die erste Klemmvorrichtung 31 besitzt eine Flügelschraube 42, die den in der ersten Klemmvorrichtung 31 geführten zweiten Arm 32 klemmt. Gegenüber der ersten Klemmvorrichtung 31 ist die zweite Klemmvorrichtung 34 vorgesehen in der ebenfalls der zweite Arm 32 geführt ist. Die Enden des zweiten Arms 32 sind jeweils mit einer Schraube 43 versehen, deren Kopf einen größeren Durchmesser ausweist als der zweite Arm 32, um somit ein Herausgleiten des zweiten Arms 32 aus der ersten Klemmvorrichtung 31 und zweiten Klemmvorrichtung 34 zu verhindern. In der zweiten Klemmvorrichtung 34 ist senkrecht zum zweiten Arm 32 der dritte Arm 35 geführt, der gegenüber der zweiten Klemmvorrichtung 34 die Halterung 37 trägt. In der Halterung 37 ist ein Lichtleiter 44 befestigt, der das Beleuchtungslicht von einer Lichtquelle 52 zum Objekt transportiert. Das Lichtaustrittsende 45 des Lichtleiters 44 ist in der Halterung befestigt. Die Halterung 37 ist drehbar, um das Beleuchtungslicht in optimaler Weise auf das Objekt zu richten. Die Lichtquelle 52 ist ebenfall mit dem PC 20 verbunden und empfängt von diesem entsprechende Steuersignale für die Einstellung der Intensität.

In Fig. 4 zeigt eine Schnittdarstellung der Befestigungseinrichtung 25a oder 25b entlang der in Fig. 3 dargestellten und mit A-A bezeichneten Schnittlinie. Am ersten Arm 30 ist die erste Klemmvorrichtung 31 mit einer Schraube 50 befestigt. Gegenüber der ersten Klemmvorrichtung 31 ist am ersten Arm 30 die Backe 40 permanent befestigt. Die Backe 40 besitzt die Krümmung des drehbaren Rings 26a und ist über zwei Schrauben 41 an diesem befestigt. In der ersten Klemmvorrichtung 31 ist der zweite Arm 32 geführt und ist mit der Flügelschraube 42 klemmbar.

Der drehbare Ring 26a und 26b besitzt eine Skalierung 27, der zweite Arm 32 besitzt eine Skalierung 33, der dritte Arm 35 besitzt eine Skalierung 36 und die Halterung 37 besitzt ebenfalls eine Skalierung 38. Bei der Untersuchung von Objekten wird die Beleuchtung mit der Befestigungseinrichtung 25a und 25b derart eingestellt, dass mit den eingestellten Beleuchtungsbedingungen eine optimale Erfassung der zu untersuchenden Merkmale gewährleistet ist. Ebenso kann an der Klemmvorrichtung 31, der Klemmvorrichtung 34 und der Halterung 37 jeweils eine Ablesemarkierung (nicht dargestellt) vorgesehen sein, um den Benutzer auf den Ableseort an für die jeweiligen Skalierungen hinzuweisen. An den verschiedenen Skalierungen 27, 33, 36, 38 können die Werte für die optimalen Beleuchtungen abgelesen werden. Um für spätere Untersuchungen z.B. die gleichen Beleuchtungsbedingungen zu erhalten werden die Werte notiert. Diese Werte können z.B. zusammen mit der Bilddatei und den elektrisch erfassbaren Makroskopeinstellungen, wie z. B. Position der Halbblenden, Objektivvergrößerung, Lampenintensität usw., in einer Tabelle im PC 20 notiert und abgelegt werden. Bei der erneuten vergleichenden Untersuchung der Objekte 9a und 9b kann die zu den Objekten gehörende Datei in PC 20 abgerufen werden. Die Werte werden an der Befestigungseinrichtung 25a und 25b eingestellt, so dass die gleichen Beleuchtungsbedingungen reproduzierbar sind. Analog zu den Werten die von den Skalierungen 27, 33, 36, 38 abgelesen und in der Datei im PC 20 gespeichert sind, können weitere Einstellwerte, wie z. B. Position der XYZ-Tische 8a, 8b, verwendetes Objektiv, Beleuchtungsstärke usw., automatisch bei der Bildaufnahme in der Datei abgelegt werden. Bei einer erneuten Untersuchung können dann diese Werte automatisch angefahren bzw. eingestellt werden. Eine Voraussetzung hierfür ist eine entsprechende Motorisierung der Makroskope 2a, 2b.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste

- 1: vergleichendes optisches System
- 2a: erstes Makroskop
- 2b: zweites Makroskop
- 3: Brücke
- 4: Einblick
- 5: Tubus
- 6: Anschluss
- 7: Abschluss
- 8a: erster XYZ-Tisch
- 8b: zweiter XYZ-Tisch
- 9a: Objekt auf dem ersten XYZ-Tisch
- 9b: Objekt auf dem zweiten XYZ-Tisch
- 10: Säule
- 11: Schwalbenschwanzführung
- 12: Bodenteil
- 14: Steuer- und Einstellvorrichtung
- 14a: Betätigungselemente
- 16: Motore
- 17: Objektivrevolver
- 18a: erste Fernsteuereinrichtung
- 18b: zweite Fernsteuereinrichtung
- 19: Kabel
- 20: PC
- 21: RS232-Kablel oder ein USB-Kabel
- 22: Monitor
- 23: optische Achse
- 24: Achse
- 25a: Befestigungseinrichtung
- 25b: Befestigungseinrichtung
- 26a: drehbarer Ring
- 26b: drehbarer Ring
- 27: Skalierung
- 28: Ablesemarkierung
- 29: Feststellschraube
- 30: erster Arm
- 31: erste Klemmvorrichtung
- 32: zweiter Arm
- 33: Skalierung
- 34: zweite Klemmvorrichtung
- 35: dritter Arm
- 36: Skalierung
- 37: Halterung
- 38: Skalierung
- 39: Öffnung
- 40: Backe
- 41: Schraube
- 42: Flügelschraube
- 43: Schraube
- 44: Lichtleiter
- 45: Lichtaustrittsende des Lichtleiters
- 50: Schraube
- 52: Lichtquelle

## Patentansprüche

1. Vergleichendes optisches System (1) mit einem Beleuchtungssystem für Objekte, wobei das vergleichende optische System (1) mit mehreren Makroskopen (2a, 2b) versehen ist, die über eine Brücke (3) miteinander verbunden sind, und somit mechanisch und optisch miteinander gekoppelt sind, **dadurch gekennzeichnet, dass** jedes Makroskop (2a, 2b) mit einer Befestigungseinrichtung (25a, 25b) für das Beleuchtungssystem verbunden ist, und dass die Befestigungseinrichtung (25a, 25b) aus mehreren beweglichen Armen (30, 32, 35) und einer einstellbaren Halterung (37) für eine Lichtquelle (52) besteht, dass jedes Makroskop (2a, 2b) einen drehbaren Ring (26a, 26b) umfasst, an dem ein erster Arm (30) befestigt ist, dass an dem dem drehbaren Ring (26a, 26b) gegenüberliegenden Ende des ersten Arms (30) eine erste Klemmvorrichtung (31) vorgesehen ist, in der ein zweiter Arm (32) geführt ist, der mit einer Skalierung (33) versehen ist, dass am zweiten Arm (32) gegenüber der ersten Klemmvorrichtung (31) eine zweite Klemmvorrichtung (34) vorgesehen ist, in der der zweite Arm (32) und ein dritter Arm (35) senkrecht zueinander führbar sind, und dass gegenüber der zweiten Klemmvorrichtung (34) eine Halterung (37) angebracht für eine Beleuchtung angebracht ist.

2. Vergleichendes optisches System nach Anspruch 1, **dadurch gekennzeichnet, dass** der drehbare Ring (26a, 26b) mit einer Skalierung (27) versehen ist und mit einer Feststellschraube (29) arretierbar ist.

3. Vergleichendes optisches System nach Anspruch 1 oder 2 **dadurch gekennzeichnet, dass** die Halterung (37) um eine Achse (24) senkrecht zur Drehachse (23) des drehbaren Rings (26a, 26b) und senkrecht zum dritten Arm (35) drehbar ist.

4. Vergleichendes optisches System nach Anspruch 3, **dadurch gekennzeichnet, dass** die Halterung (37) mit einer Skalierung (38) versehen ist.

5. Vergleichendes optisches System nach einem der vorangehenden Ansprüche, **dadurch gekennzeichnet, dass** dem vergleichenden optischen System (1) ein PC (20) zugeordnet ist, in dem die für die Untersuchung eingestellten optimalen Beleuchtungsbedingungen an Hand der Werte der verschiedenen Skalierungen (27, 33, 36, 38) in einer Datei speicherbar sind.

6. Vergleichendes optisches System nach Anspruch 5, **dadurch gekennzeichnet, dass** die Werte der verschiedenen Skalierungen (27, 33, 36, 38) zusammen mit den Bilddaten der zu vergleichenden Objekte (9a, 9b) speicherbar und abrufbar sind.

7. Vergleichendes optisches System nach Anspruch 1, **dadurch gekennzeichnet, dass** die Lichtquelle (52) durch das Austrittsende eines Lichtleiters (44) gebildet ist, wobei der Lichteinfall auf die Objekte durch die Werte auf der Skalierung am Befestigungselement (25a, 25b) bestimmt ist.

8. Vergleichendes optisches System nach Anspruch 7, **dadurch gekennzeichnet, dass** die Lichtquelle (52) mit dem PC (20) verbunden ist und von diesem Steuersignale empfängt.

9. Vergleichendes optisches System nach Anspruch 5, **dadurch gekennzeichnet, dass** in der im PC (20) vorgesehnen Datei die Positionen der XYZ-Tische (8a, 8b), die Intensität der Lichtquelle (52) und die Stellung des Revolvers ablegbar sind, und dass diese Werte aus der Datei zur Einstellung des Makroskops (2a, 2b) abrufbar sind.

## Claims

1. Comparison optical system (1) having an illumination system for specimens, the comparison optical system (1) being equipped with several macroscopes (2a, 2b) that are connected to one another via a bridge (3) and thereby coupled mechanically and optically to one another,
**characterized in that** each macroscope (2a, 2b) is connected to an attachment device (25a, 25b) for the illumination system, and **in that** the attachment device (25a, 25b) comprises several movable arms (30, 32, 35) and an adjustable holder (37) for a light source (52), **in that** each macroscope (2a, 2b) includes a rotatable ring (26a, 26b) to which a first arm (30) is attached, **in that** there is provided at the end of the first arm (30) opposite the rotatable ring (26a, 26b) a first clamping apparatus (31) in which a second arm (32), provided with a scale (33), is guided, **in that** there is provided on the second arm (32), opposite the first clamping apparatus (31), a second clamping apparatus (34) in which the second arm (32) and a third arm (35) are guidable perpendicular to one another; and **in that** a holder (37) for an illumination system is mounted opposite the second clamping apparatus (34).

2. Comparison optical system according to Claim 1,
**characterized in that** the rotatable ring (26a, 26b) is equipped with a scale (27) and can be immobilized using a locking screw (29).

3. Comparison optical system according to Claim 1 or 2, **characterized in that** the holder (37) is rotatable about an axis (24) perpendicular to the rotation axis (23) of the rotatable ring (26a, 26b) and perpendicular to the third arm (35).

4. Comparison optical system according to Claim 3,
**characterized in that** the holder (37) is provided with a scale (38).

5. Comparison optical system according to one of the preceding claims, **characterized in that** a PC (20), in which the optimum illumination conditions established for the examination, based on the values of the various scales (27, 33, 36, 38), can be stored in a file, is associated with the comparison optical system (1).

6. Comparison optical system according to Claim 5,
**characterized in that** the values of the various scales (27, 33, 36, 38) can be stored and retrieved together with the image data of the specimens (9a, 9b) to be compared.

7. Comparison optical system according to Claim 1,
**characterized in that** the light source (52) is formed by the exit end of a light guide (44), the light incidence onto the specimens being determined by the values on the scale on the attachment element (25a, 25b).

8. Comparison optical system according to Claim 7,
**characterized in that** the light source (52) is connected to the PC (20) and receives control signals therefrom.

9. Comparison optical system according to Claim 5,
**characterized in that** the positions of the XYZ stages (8a, 8b), the intensity of the light source (52), and the position of the nosepiece can be stored in the file provided in the PC (20); and **in that** those values can be retrieved from the file in order to set the macroscope (2a, 2b).

## Revendications

1. Système optique comparateur (1) avec un système d'illumination pour des objets, le système optique comparateur (1) étant pourvu de plusieurs macroscopes (2a, 2b) qui sont reliés entre eux par un pont (3), et qui sont ainsi couplés entre eux mécaniquement et optiquement, **caractérisé en ce que** chaque macroscope (2a, 2b) est relié à une installation de fixation (25a, 25b) pour le système d'illumination, et **en ce que** l'installation de fixation (25a, 25b) est constituée de plusieurs bras mobiles (30, 32, 35) et d'un support réglable (37) pour une source lumineuse (52), **en ce que** chaque macroscope (2a, 2b) comporte un anneau tournant (26a, 26b), auquel est fixé un premier bras (30), **en ce qu'**à l'extrémité du premier bras (30) opposée à l'anneau tournant (26a, 26b), il est prévu un premier dispositif de serrage (31) dans lequel est guidé un deuxième bras pourvu d'une échelle graduée (33), **en ce que** sur le deuxième bras (32) à l'opposé du premier dispositif de serrage (31), il est prévu un deuxième dispositif de serrage (34) dans lequel on peut guider le deuxième bras (32) et un troisième bras (35) perpendiculaires l'un à l'autre, et **en ce qu'**un support (37) est fixé à l'opposé du deuxième dispositif de serrage (34) pour une illumination.

2. Système optique comparateur selon la revendication 1, **caractérisé en ce que** l'anneau tournant (26a, 26b) est pourvu d'une échelle graduée (27) et peut être arrêté par une vis de blocage (29).

3. Système optique comparateur selon la revendication 1 ou 2, **caractérisé en ce que** le support (37) peut tourner autour d'un axe (24) perpendiculaire à l'axe de rotation (23) de l'anneau tournant (26a, 26b) et perpendiculaire au troisième bras (35).

4. Système optique comparateur selon la revendication 3, **caractérisé en ce que** le support (37) est pourvu d'une échelle graduée (38).

5. Système optique comparateur selon une des revendications précédentes, **caractérisé en ce qu'**au système optique comparateur (1) est associé un PC (20) dans lequel on peut enregistrer dans un fichier, les conditions d'illumination optimales réglées pour l'examen, basées sur les valeurs des différentes échelles graduées (27, 33, 36, 38).

6. Système optique comparateur selon la revendication 5, **caractérisé en ce que** les valeurs des différentes échelles graduées (27, 33, 36, 38) peuvent être enregistrées et relues en même temps que les données d'images des objets à comparer (9a, 9b).

7. Système optique comparateur selon la revendication 1, **caractérisé en ce que** la source lumineuse (52) est formée par l'extrémité de sortie d'un conduit de lumière (44), l'incidence de la lumière sur l'objet étant définie par les valeurs sur l'échelle de graduations de l'élément de fixation (25a, 25b).

8. Système optique comparateur selon la revendication 7, **caractérisé en ce que** la source lumineuse (52) est reliée au PC (20) et qu'elle reçoit de celui-ci des signaux de commande.

9. Système optique comparateur selon la revendication 5, **caractérisé en ce qu'**on peut déposer dans le fichier prévu dans le PC (20), les positions des tables XYZ (8a, 8b), l'intensité de la source lumineuse (52) et la position du revolver, et que ces valeurs peuvent être lues du fichier pour régler le macroscope (2a, 2b).
